(19) Europäisches Patentamt
European Patent Office
Office européen des brevets

(11) **EP 1 674 258 B1**

(12) **EUROPÄISCHE PATENTSCHRIFT**

(45) Veröffentlichungstag und Bekanntmachung des Hinweises auf die Patenterteilung:
**07.11.2007 Patentblatt 2007/45**

(51) Int Cl.:
***B41F 13/00*** *(2006.01)*

(21) Anmeldenummer: **05027476.0**

(22) Anmeldetag: **15.12.2005**

(54) **Verfahren zur Kompensation von rotationsschwingungsbedingten Passerabweichungen**

Method for compensating register deviations due to vibrations

Procédé de compensation de divergences de repères liées aux vibrations

(84) Benannte Vertragsstaaten:
**DE FR GB IT**

(30) Priorität: **23.12.2004 DE 102004062112**
**23.12.2004 DE 102004062110**

(43) Veröffentlichungstag der Anmeldung:
**28.06.2006 Patentblatt 2006/26**

(73) Patentinhaber: **Koenig & Bauer AG**
**97080 Würzburg (DE)**

(72) Erfinder:
• **Hefftler, Victor, Dr.-Ing.**
**01640 Coswig (DE)**

• **Riese, Martin, Dr.-Ing.**
**01445 Radebeul (DE)**

(56) Entgegenhaltungen:
**DE-A1- 19 914 627        US-A- 5 596 931**

• **"DRUCKMASCHINEN DUERFEN NICHT IN SCHWINGUNG GERATEN" DEUTSCHER DRUCKER, DEUTSCHER DRUCKER VERLAGSGESELLSCHAFT, OSTFILDERN, DE, Bd. 37, Nr. 42, 15. November 2001 (2001-11-15), Seite 44,46, XP001103404 ISSN: 0012-1096**

## Beschreibung

Die Erfindung betrifft ein Verfahren zur Kompensation von rotationsschwingungsbedingten Passerabweichungen in einer Bogenrotationsdruckmaschine mit einem eine Bogenanlage (AN) und Druck- und/oder Lackwerke (DW) verbindenden Antriebsräderzug (ARZ) und einem auf den Antriebsräderzug wirkenden Hauptantriebsmotor (M), dem eine Antriebsregelung (A) zugeordnet ist.

Unter Passerabweichungen werden relative Lageabweichungen beim Übereinanderdrucken der nacheinander in den einzelnen Druck- oder Lackwerken aufgebrachten Teildruckbildern (Farbauszüge) oder Lackschichten verstanden. Systematische Passerabweichungen zwischen den Teildruckbildern können durch Ungenauigkeiten bei der Druckformherstellung, Fehllagen der Druckform, Abwicklungsdifferenzen bei der Druckbildübertragung auf den Bedruckstoff oder Bedruckstofflagefehler entstehen. Diese Fehler sind mit bekannten Stellmitteln an den Druck- oder Lackwerken gut beherrschbar. Gegenstand zahlreicher Bemühungen ist die Beseitigung von Passerfehlern, die durch Rotationsschwingungen der bedruckstoffführenden Rotationskörper entstehen.

Bei Bogenrotationsdruckmaschinen ist es Standard, zumindest die Druckzylinder der einzelnen Druckwerke sowie die zwischen den Druckwerken angeordneten Transport- oder Übergabezylinder mit einem Zahnräderzug mechanisch miteinander zu koppeln und diesen Antriebsräderzug mittels eines Hauptantriebes elektrisch anzutreiben. Der Antriebsräderzug einer Druckmaschine mit den daran angekoppelten Rotationskörpern bildet ein Schwingungssystem, dessen Dynamik durch Lastmomente, Federkonstanten, Trägheitsmomente usw. bestimmt wird. Die gleichmäßige Rotation der Elemente dieses Antriebsstranges kann durch winkelabhängige, mit jeder Umdrehung periodisch wiederkehrende (synchrone) Rotationsschwingungen und nicht periodische (asynchrone) Rotationsschwingungen gestört werden.

Je mehr Druckwerke eine Bogendruckmaschine aufweist, desto größer wird die Schwingungsneigung.

Entstehungsquellen von periodischen Rotationsschwingungen in Bogenrotationsdruckmaschinen sind Drehmomentschwankungen im Antriebsräderzug durch takt- bzw. drehwinkelgebundene Arbeitsbewegungen von Kurvengetrieben (Anlegergetriebe, Changierbewegungen im Farbwerk), Zentrierfehler von Zahnrädern und vor allem Unstetigkeiten im Abrollkontakt von Zylindern, insbesondere durch Zylinderkanäle, sowie Öffnungs- und Schließbewegungen der Greifersysteme.

Drehmomentschwankungen führen infolge der Elastizität der Antriebszahnräder zu individuell unterschiedlichen Abweichungen von der Solldrehwinkellage bzw. zu Abweichungen in der Synchronität der Rotationsbewegungen bis hin zu Zahnflankenwechseln an den ineinander greifenden Antriebszahnrädern.

Die von der Schwingungsquelle im Antriebsräderzug lokal angeregten Rotationsschwingungen setzen sich über die ineinandergreifenden Zahnräder des Antriebsräderzuges über die gesamte Druckmaschine fort, wobei sie sich als ständig wechselnde Schwankungen der Drehwinkeldifferenz zwischen den benachbarten Rotationskörpern und somit als qualitätskritische Übergabepasserfehler/ Dublierfehler bemerkbar machen.

Die Rotationsschwingungen zeigen bei bestimmten Frequenzen (Eigenfrequenzen) zeitkonstante, charakteristische Amplituden-Ortsverteilungen (Eigenschwingformen) über die Länge der Druckmaschine, die zumindest an den Enden des Antriebsräderzuges, das sind i. a. das erste und letzte Druck- oder Lackwerk, lokale Extrema erreichen. Die Eigenfrequenzen und Eigenformen sind von der Schwingungsanregung unabhängige Eigenschaften einer Druckmaschine und hängen von der Anzahl der Druckwerke und der Bauweise der Maschine ab, wobei die Schwingungen in der ersten Eigenform mit der niedrigsten Eigenfrequenz dominieren, d.h. die größten Schwingungsamplituden aufweisen, und deshalb besondere Beachtung bei der Schwingungsanalyse einer Druckmaschine finden.

Im Falle der Schwingungsanregung im Antriebsräderzug durch störende Rotationsschwingungen mit einer Frequenz in der Nähe einer Eigenfrequenz der Druckmaschine kommt es zur Resonanz, d.h. zu Schwingungsüberhöhungen, die sich in drehzahlabhängigen, unzulässig hohen Übergabepasserabweichungen zwischen den in den einzelnen Druck- oder Lackwerken aufgebrachten Teildruckbildern oder Lackschichten äußern. Weiterhin führen diese Resonanzen zu starken Belastungen der Antriebselemente und zur Verschleißförderung.

Wesentliche Schwingungsquellen sind Bogenpositioniersysteme (Vorder- und Ziehmarken) und Bogenbeschleunigungssysteme (Schwinganlage, Stopptrommel) von Bogenanlagen, die infolge ihrer diskontinuierlichen Bewegungen Schwankungen im Antriebsmoment der Bogenanlage verursachen. Da die Bogenanlage vom Antriebsräderzug mit angetrieben wird, werden die von der Bogenanlage verursachten Schwingungen auf den Antriebsräderzug übertragen und breiten sich über die gesamte Druckmaschine aus.

Die Drehmomentschwankungen an der Bogenanlage nehmen mit der Erhöhung der Drehzahl zu und führen zu druckqualitätsgefährdenden Schwingungsamplituden im gesamten Antriebsräderzug, die bei hohen Druckgeschwindigkeiten unzulässig hohe Übergabepasserabweichungen zwischen den in den einzelnen Druck- oder Lackwerken aufgebrachten Teildruckbildern oder Lackschichten zur Folge haben. Weiterhin führen die lastwechselbedingten Rotationsschwingungen im Antrieb zu starken Belastungen der Antriebselemente und zur Verschleißförderung.

Rotationsschwingungen können durch passive und aktive Zusatzsysteme reduziert werden. Bisher dazu bekannte Einrichtungen sind auf die unspezifische Kompensation aller auftretenden, periodischen und nichtperiodischen Rotationsschwingungen gerichtet, wofür aufwendige Schwingungsaufnehmer und Regelkreise erforderlich sind.

In der DE 44 12 945 A1 wird eine Vorrichtung und ein Verfahren zur Reduzierung von Rotationsschwingungen von Druckmaschinen mit Hilfe von Betätigungsgliedern, die auch Antriebsmotoren sein können, offenbart, wobei Daten zur Ansteuerung der Betätigungsglieder entweder durch Messung mit Schwingungsaufnehmern, Berechnung oder durch in einem Probelauf der Druckmaschine ermittelt werden. Die Bildung der Steuersignale für die Betätigungsglieder ist nicht näher beschrieben.

Die DE 199 14 627 A1 betrifft ein Verfahren und eine Vorrichtung zur Kompensation der Drehschwingung in einer Druckmaschine, welches derart ausgestaltet ist, dass mindestens eine Eigenform der Druckmaschine bestimmt wird und dass für mindestens einen Ort, an dem diese Eigenform nicht die Amplitude 0 hat, ein jeweiliges

Gegenmoment für die Kompensation der Momente, welche zu Schwingungen in der Eigenform anregen, durch ein Kurvengetriebe oder einen zusätzlichen Motor aufgebracht wird. Gegenmomente können für eine mittlere Drehzahl oder auch für verschiedene Drehzahlen und Maschinenparameter bestimmt werden. Auch hier bleibt offen, wie die Gegenmomente gebildet werden. Nachteilig ist der Aufwand für zusätzliche Schwingungskompensatoren.

Die DE 101 49 525 A1 beschreibt ein Verfahren und eine Einrichtung zur Kompensation einer mechanischen Rotationsschwingung durch Überlagerung wenigstens eines diskreten Frequenzanteiles der Rotationsschwingung durch ein harmonisches Moment gleicher Frequenz, das von einem Aktuator aufgebracht wird, wobei die Frequenz in Abhängigkeit von der Eigenfrequenz und der Maschinengeschwindigkeit online bestimmt wird. Die Einrichtung umfasst einen kostenintensiven adaptiven Regelkreis mit einem Schwingungssensor und einen das harmonische Kompensationsmoment gleicher Frequenz direkt oder indirekt auf die Maschinenwelle aufbringenden Aktuator, der ein Antriebsmotor sein kann. Nachteilig ist die Ausrichtung des Verfahrens auf die maximale Schwingungskompensation an nur einer Maschinenwelle.

Aus der EP 0 592 850 B1 ist eine Vorrichtung und ein Verfahren bekannt, das aktive Betätigungselemente, beispielsweise Motoren, an den einzelnen Zylindern vorsieht, um über Regelkreise die Motoren derart anzusteuern, dass die Schwingungen tilgende Stellkräfte entstehen. Es handelt sich dabei um keine von vornherein gezielte Gegenstrategie gegen Schwingungen in den maschinentypischen Eigenformen, sondern die asynchronen, also nur nichtperiodisch mit den Umdrehungen der drehenden Teile auftretenden Schwingungen, werden gemessen und danach am Ort der Messung bekämpft. Auf diese Weise ist die Kompensation jedoch zeitlich nicht optimiert und erfordert einen hohen Regelaufwand, wobei die Gefahr besteht, dass die Regelung entweder eine zu große Zeitverzögerung aufweist oder ihrerseits Schwingungen verursacht.

Den bekannten Schwingungskompensationsverfahren ist weiterhin der Nachteil gemeinsam, dass sie nicht an einer zu erreichenden Mindestdruckqualität orientiert sind.

Der Erfindung liegt die Aufgabe zugrunde, ausgehend von den Nachteilen aus dem Stand der Technik ein Verfahren zur Reduzierung von rotationsschwingungsbedingten Passerabweichungen auszugestalten, dass mit vorhandenen Mitteln eine Vermeidung druckqualitätsmindernder Passerabweichungen an allen Druck- oder Lackwerken einer Rotationsdruckmaschine ermöglicht.

Erfindungsgemäß wird die Aufgabe durch ein Verfahren mit den Merkmalen des ersten Anspruchs gelöst. Zweckmäßige Weiterbildungen des Verfahrens sind Gegenstand der Unteransprüche.

Der Grundgedanke der Erfindung besteht darin, im Gegensatz zu der bekannten Zielstellung der maximalen Reduktion der Rotationsschwingungen in allen Betriebssituationen, die zwangsläufig zu aufwändigen Lösungen führt, die schwingungsreduzierenden Maßnahmen einerseits nur auf Resonanzdrehzahlbereiche, in denen tatsächlich druckqualitätsbeeinträchtigende und verschleißfördernde Schwingungsüberhöhungen auftreten, zu beschränken, andererseits aber die Einhaltung einer vorgegebenen Druckqualität (maximal zulässige Passertoleranzen) an allen Druck- und/oder Lackwerken der Druckmaschine (z.B. an den Bogenübergabestellen zwischen den Druck- oder Lackwerken einer Bogendruckmaschine) mit vorhandenen Mitteln zu gewährleisten.

Dies wird erfindungsgemäß durch Überlagerung des Antriebsmomentes des Hauptantriebsmotors mit innerhalb der Antriebsregelung gespeicherten, den Resonanzschwingungen entgegenwirkenden, drehzahlabhängigen Gegenmomenten in den Resonanzdrehzahlbereichen erreicht. Bei verschiedenen Drehzahlen werden unterschiedliche harmonische Kompensationsmomente mit drehzahlabhängigen Amplituden zur Schwingungsdämpfung genutzt.

Der Grundgedanke des im Anspruch 11 beschriebenen Verfahrens besteht darin, die einer Berechnung oder messtechnischen Ermittlung gut zugänglichen periodischen Drehmomentschwankungen im Antrieb einer Bogenanlage durch Gegenmomente eines in unmittelbarer Nähe zur Bogenanlage am ersten Druck- oder Lackwerk angeordneten Hauptantriebsmotors zu kompensieren, so dass der resultierende Antriebsmoment zum zweiten Druck- oder Lackwerk frei von Rotationsschwingungen der Bogenanlage ist. Die drehzahlabhängigen Kompensationsdrehmomente sind innerhalb der Antriebsregelung des Hauptantriebsmotors als Wertetabelle (Drehwinkel, normierter Kompensationsdrehmoment) oder als Kompensationsmomente mit ihren Fourierkoeffizienten gespeichert.

Die Kompensationsmomente werden einmalig in Testläufen unter praxisnahen Druckbedingungen ermittelt oder aus Konstruktionsdaten berechnet und mit drehzahlabhängigen Anteilen als permanent wirkender Algorithmus dem Antriebsmotorstrom im späteren Druckbetrieb überlagert. Dabei wird die überraschende Tatsache genutzt, dass auch die störenden asynchronen Schwingungen gedämpft werden, wenn die synchronen (periodischen) Schwingungen mit harmonischen Gegenmomenten kompensiert werden.

Das erfindungsgemäße Verfahren hat die wirtschaftlichen Vorteile, dass es mit dem vorhandenen Hauptantriebsmotor realisierbar ist und keine zusätzlichen Schwingungskompensatoren benötigt. Anstelle aufwändiger Regelkreise ist lediglich ein programmierbares Steuerungsmodul für den Hauptantriebsmotorstrom erforderlich. Weiterhin garantiert das vorgeschlagene Verfahren mit einem Minimum an Kompensationsmitteln die Sicherung der Druckqualität an allen Druck-,oder Lackwerken.

Das erfindungsgemäße Verfahren soll am Beispiel einer Bogenrotationsdruckmaschine näher erläutert werden. Die zugehörigen Zeichnungen zeigen dabei in

Fig.1      eine schematische Darstellung einer Bogenrotationsdruckmaschine mit Rotationsschwingungsmesseinrichtungen und Schwingungskompensation

Fig.2      Eigenformen der Resonanzschwingungen

Fig.3a     ein Beispiel für ein Resonanzschaubild für ein Schwingsystem mit zwei Eigenfrequenzen

Fig.3b     Rotationsschwingungen in Abhängigkeit von der Drehzahl

Fig.3c     Kompensationsmomente in Resonanzdrehzahlbereichen

Fig.4a     den Antriebsmoment des Hauptantriebsmotors

Fig.4b     Kompensationsmomente im Antriebsmotorstrom

Fig.5      eine schematische Darstellung einer Bogenrotationsdruckmaschine mit Bogenanlage

Fig.6      das Prinzip der Schwingungskompensation an der Bogenanlage

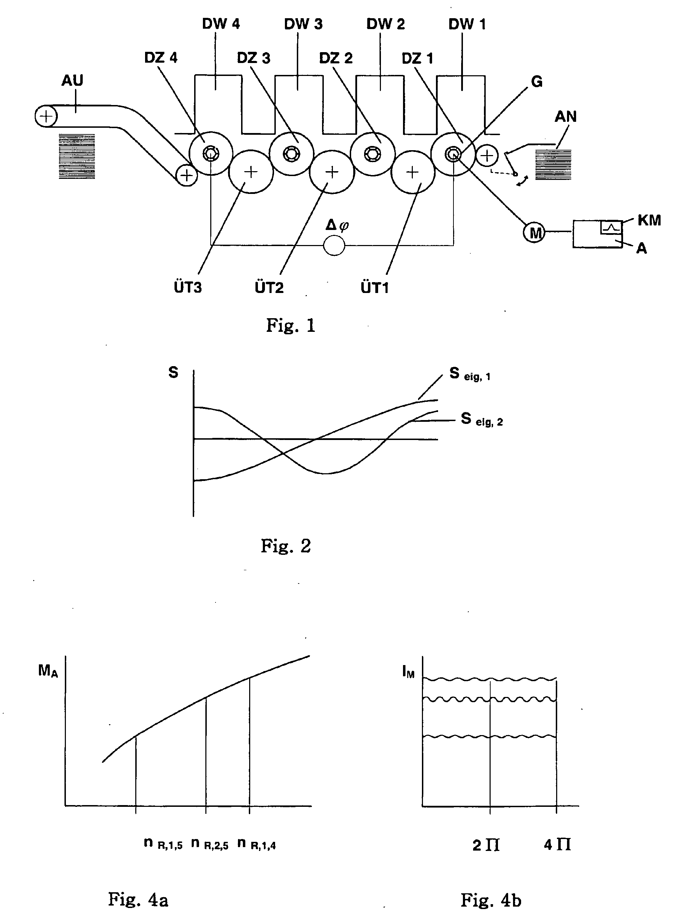

In Fig.1 ist beispielhaft eine Bogenrotationsdruckmaschine in Reihenbauweise mit einer Bogenanlage AN, Druckwerken DW1...4 und einer Bogenauslage AU schematisch dargestellt. Von den Druckwerken sind lediglich die schwingungsrelevanten bogenführenden Druckzylinder DZ1...4 und die Übergabetrommeln ÜT1...3 dargestellt. Zumindest diese Rotationskörper werden über einen durchgehenden Antriebsräderzug ARZ in ihrer Drehbewegung synchronisiert. Der Antriebsmoment $M_A$ eines Hauptantriebsmotors M für die Druckmaschine wird über den Druckzylinder DZ1 des ersten Druckwerkes DW1 in den Antriebsräderzug ARZ eingespeist. Der Hauptantriebsmotor M wird von einer Antriebsregelung A drehzahl- und drehmomentgeregelt.

In einer Bogenrotationsdruckmaschine läuft eine Vielzahl von Arbeitsbewegungen ab, die mit Lastwechseln verbunden sind. Dabei werden periodische (synchrone) und asynchrone Rotationsschwingungen S in der gleichförmigen Drehbewegung der über den Antriebsräderzug ARZ verbundenen Rotationskörper DZ,ÜT in den Druck- oder Lackwerken angeregt. Überschreiten die Lastwechselamplituden ein bestimmtes Maß, kommt es in den Resonanzdrehzahlbereichen $n_R$ zu Schwingungsüberhöhungen $S_R > S_{zul}$ in bestimmten Abschnitten des Antriebsräderzuges ARZ, in denen die Eigenschwingungen der Druckmaschine besonders ausgeprägt sind, und damit zu unzulässigen Schwankungen der Drehwinkelpositionen bei der Bogenübergabe von einem Greifersystem an das folgende Greifersystem (Übergabepasser) und dadurch zu einer nicht mehr tolerierbaren Beeinträchtigungen der Druckgenauigkeit. Diese für die Druckqualität relevanten Resonanzschwingungen $S_R > S_{zul}$ werden messtechnisch erfasst und einer Fourieranalyse unterworfen.

Danach lassen sich Schwingungen S als Summe von i diskreten harmonischen Schwingungen mit unterschiedlichen Anteilen $a_i$, Frequenzen und Phasenlagen $b_i$ beschreiben, wobei die Frequenzen f ganzzahlige Vielfache (Ordnungen) i der Drehzahl n sind:

$$f = i \cdot n.$$

$$S = a_0 + a_1 \cdot \sin(t \cdot (1 \cdot n) + b_1) + a_2 \cdot \sin(t \cdot (2 \cdot n) + b_2) + ... + a_i \cdot \sin(t \cdot (i \cdot n) + b_i) \quad (1)$$

mit $a_i$ = Amplitude der i-ten harmonischen Schwingung

$b_i$ = Phasenverschiebung der i-ten harmonischen Schwingung

t = Zeit

n = Drehzahl

i = ganzzahliges Verhältnis zwischen der Frequenz f der Störung und der Druckmaschinendrehzahl

Jede Druckmaschine weist im Druckdrehzahlbereich zwischen einer unteren Druckgeschwindigkeit $n_u$ und einer oberen Druckgeschwindigkeit $n_o$ mindestens eine relevante Eigenfrequenz $f_{eig,l}$ auf, deren Wert im Wesentlichen von der Maschinenkonfiguration abhängt. Wenn die Frequenz f einer Erregerschwingung bzw. eines harmonischen Schwingungsanteiles i annähernd einer der I Eigenfrequenzen $f_{eig,l}$ entspricht (Resonanzdrehzahl $n_{R,I,i}$),

$$i \cdot n_{R,I,i} = f_{eig,I} \tag{2},$$

liegt eine Resonanzerregung durch die i-te harmonische Erregerschwingung vor. Dies führt zu besonders hohen Schwingungsanregungen und somit zu Schwingungsüberhöhungen (Resonanzschwingungen $S_{R,I,i}$) im Antriebsräderzug und den darüber verbundenen Zylindern und Trommeln, wobei bei der Resonanz mit der niedrigsten Eigenfrequenz $f_{eig,1}$ die höchsten Rotationsschwingungsamplituden $S_{eig,1}$ entstehen. Die Amplituden $a_i$ der harmonischen Anteile der Resonanzschwingungen $S_R$ fallen i.a. mit steigender Ordnung i ab und gleichzeitig nimmt die Dämpfung durch reibungsbehaftete Bewegungsabläufe mit steigender Frequenz zu, so dass die Resonanzen der höheren Ordnungen i kleinere Resonanzschwingungsamplituden zur Folge haben.

Sind die Eigenfrequenzen $f_{eig,I}$ einer Druckmaschine bekannt, können nach (2) alle Resonanzdrehzahlen $n_{R,I,i}$ ermittelt werden.

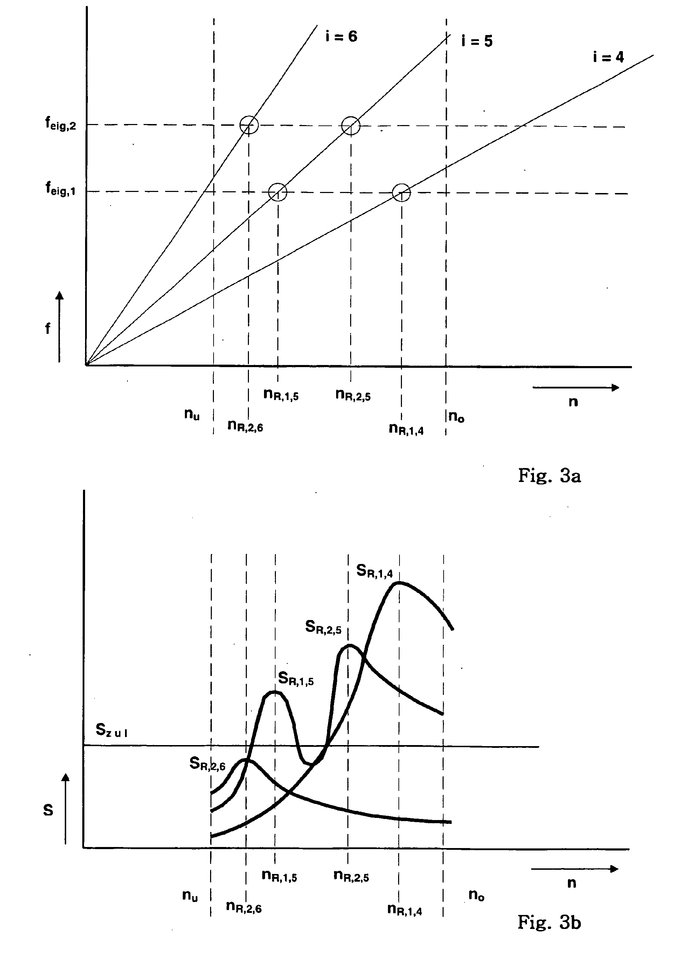

Der Zusammenhang zwischen Eigenfrequenzen $f_{eig,I}$ und Resonanzdrehzahlen $n_R$ geht aus einem Resonanzschaubild (Fig. 3a) hervor.

Die Erregerfrequenzen f sind abhängig von der Drehzahl n. Sie sind beschreibbar durch die Geradengleichung $f = i \cdot n$ und bilden ansteigende Geraden in einem Frequenz-Drehzahl-Diagramm, die den Koordinatenursprung schneiden. Dagegen verlaufen die Eigenfrequenzen $f_{eig,I}$ parallel zur Abszisse. Sie sind Konstanten, die nicht von der Drehzahl n, sondern von der konkreten Druckmaschinenkonfiguration abhängen. Die Schnittpunkte zwischen den horizontalen und diagonalen Linien sind die Resonanzdrehzahlen $n_{R,I,i}$.

Ist beispielsweise die 1. Eigenfrequenz $f_{eig,1} = 6{,}5$ Hz, dann liegt die Resonanzdrehzahl der 4. harmonischen Schwingung $n_{R,1,4}$ bei $(6{,}5 / 4)\text{s}^{-1} = 5850$ min$^{-1}$. Die Resonanzdrehzahl der 2. harmonischen Schwingung $n_{R,1,2}$ beträgt dann 11700 min$^{-1}$ usw..

Bei den Resonanzdrehzahlen $n_{R,I,i}$ einschließlich einer gewissen Toleranzbreite von 10% bis 20% ist damit zu rechnen, dass Resonanzschwingungsüberhöhungen $S_{R,I,i}$ auftreten, wenn die Druckmaschine in einem dieser Bereiche betrieben wird, die für die Druckmaschine eine erhöhte Belastung und erhöhten Verschleiß bedeuten und zu nicht mehr tolerierbaren Übergabepasserfehlern führen. Für eine gleichbleibend hohe Druckqualität ist es daher wesentlich, die Entstehung von Resonanzschwingungen $S_R$ beim Durchfahren der kritischen Resonanzdrehzahlbereiche $n_R$ zu verhindern.

Dies wird durch gezielte Kompensation der in den einzelnen Resonanzdrehzahlbereichen $n_{R,I,i}$ jeweils größten harmonischen Anteile der Resonanzschwingungen $S_{R,I,i}$ durch entgegengerichtete harmonische Kompensationsmomente $M_{K,I,i}$ erreicht.

Das vorgeschlagene Verfahren geht davon aus, dass sich die Eigenfrequenzen $f_{eig,I}$ und Erregerfrequenzen f in einer Druckmaschine nicht wesentlich verändern, wenn ihre Betriebsweise an unterschiedliche Druckaufträge angepasst wird, weil die schwingungsrelevanten Einflussgrößen, wie die Elastizität des Antriebsräderzuges ARZ, die Massenträgheit der rotierenden Zylinder DZ und Trommeln ÜT oder aktive periphere Aggregate keinen schwingungsrelevanten Veränderungen von Druckauftrag zu Druckauftrag unterworfen sind. Deshalb reicht es aus, wenn Resonanzdrehzahlbereiche $n_R$ und zugeordnete Kompensationsmomente $M_K$ für eine für den späteren Einsatz der Druckmaschine charakteristische Konfiguration und Betriebsweise unter realen Druckbedingungen einmalig ermittelt werden. Die dem Antriebsmoment $M_A$ überlagerten Kompensationsmomente $M_K$ werden in allen späteren druckauftragsbedingten Betriebsvarianten der Druckmaschine zu einer wirksamen Schwingungsreduzierung führen.

Vorteilhafterweise liegt in einer Druckmaschine durch die Reibung in den Farb- und Feuchtwerken ein stark gedämpftes Schwingungssystem vor. Die Dämpfung nimmt mit steigenden Drehzahlen n zu, so dass in der Regel nur die erste Eigenfrequenz $f_{eig,1}$ zu kritischen Resonanzschwingungen $S_R$ führt. Gleichzeitig gibt es nur wenige relevante harmonische Anteile der Resonanzschwingungen $S_R$ mit hoher Schwingungsamplitude $a_i$ und dadurch im Druckdrehzahlbereich $n_u...n_o$ nur wenige zu berücksichtigende Resonanzdrehzahlbereiche $n_R$, so dass der Aufwand für die Ermittlung der Resonanzschwingungen $S_R$ im Antriebsräderzug ARZ und der entgegengerichteten, diese kompensierenden Drehmomente $M_K$ relativ gering ist und auch nur einmal in einem ohnehin durchzuführenden Testlauf betrieben werden muss.

Zunächst werden die auftretenden Rotationsschwingungen S beim Durchfahren des Druckdrehzahlbereiches $n_u...n_o$ in obligatorischen Testläufen der Bogenrotationsdruckmaschinen unter Druckbetriebsbedingungen, die üblicherweise beim Druckmaschinenhersteller stattfinden, an Messorten, die für einen passerhaltigen Druck entscheidend sind, erfasst. Bei Bogenrotationsdruckmaschinen sind das die Druckzylinder DZ, da eine Drehwinkelabweichung eines Druckzylinders DZ bei der Bogenübergabe zu einer Umfangsverschiebung der Bogenlage (Übergabepasser) oder eine Verdrehung des Druckzylinders DZ gegenüber den das Druckteilbild auf die Bogen übertragenden Druckform- und Gummituchzylindern zu Umfangsregisterabweichungen des Druckbildes auf dem Bogen führen.

Die Druckmaschine wird dazu für die Testläufe vorzugsweise an jedem Druckzylinder DZ1... mit jeweils einem Drehwinkelgeber G ausgestattet (Fig.1). Die für die Druckmaschinensteuerung nicht erforderlichen Drehwinkelgeber G werden nach Abschluss der Testläufe wieder demontiert und für weitere Messungen an anderen Maschinen wieder verwendet, so dass der messtechnische Aufwand gering bleibt.

Die Rotationsschwingungen S im Antriebsräderzug ARZ werden durch zeitsynchrone Abfrage der Drehwinkelpositionen φ der Druckzylinder DZ1... und Differenzbildung Δφ zwischen den jeweils benachbarten Druckzylindern DZ oder - bei Reduktion der Schwingungsmessung auf die erste Eigenfrequenz $f_{eig,1}$ (s. Eigenform $S_{eig,1}$, Fig.2) - zwischen den Drehwinkelgebern G am ersten und am letzten Druckzylinder DZ1, DZ der Druckmaschine, mit denen die maximale Schwingungsamplitude messbar ist, ermittelt. Die Drehwinkeldifferenzen Δφ ergeben unter Berücksichtigung der Druckzylinderdurchmesser die Amplituden der Rotationsschwingungen S an den Druckzylinderumfängen (Fig. 3b). Die Rotationsschwingungen verändern fortwährend die Relativlage der Greifersysteme der benachbarten Druckzylinder und Übergabetrommeln DZ,ÜT im Moment der Bogenübergabe. Gleichzeitig mit den Drehwinkelmessungen erfolgt die Bestimmung der Passerabweichungen zwischen den in den einzelnen Druckwerken aufgebrachten Teildruckbildern durch eine Off- oder Online-Auswertung der bedruckten Bogen. Die Passerabweichungen korrelieren mit den Amplituden der Rotationsschwingungen S und bilden das entscheidende Kriterium für die Festlegung der kritischen Resonanzdrehzahlbereiche $n_R$, in denen schwingungsreduzierende Maßnahmen erforderlich sind. Übergabepasserabweichungen, die außerhalb des zulässigen Toleranzbereiches von $S_{zul} \leq 10$ μm im Bogenoffsetdruck liegen, markieren die druckqualitätskritischen Resonanzdrehzahlbereiche $n_R$ einer Bogenoffsetdruckmaschine.

Die Rotationsschwingungen $S_R$ in den druckqualitätskritischen Resonanzdrehzahlbereichen $n_R$ werden einer Online-Fourieranalyse unterworfen und dabei in i Anteile mit jeweils unterschiedlicher Amplitude $a_i$, Frequenz n.i und Phasenlage $b_i$ zerlegt. Beim Durchfahren der einzelnen Resonanzdrehzahlbereiche $n_{R,I,i}$ verändern sich die Amplituden $a_i$ der durch Fourieranalyse ermittelten diskreten harmonischen Schwingungsanteile drehzahlabhängig. Die harmonischen Schwingungsanteile mit den in einem Resonanzdrehzahlbereich $n_{R,I,i}$ jeweils höchsten Amplituden $a_i$ werden mit entgegengesetzter Phasenlage für jeden zugeordneten Resonanzdrehzahlbereich $n_{R,I,i}$ als Parameter für die aufzubringenden Kompensationsmomente $M_{K,I,i}$ gespeichert. Speicherwerte sind dabei die Frequenz n.i, die drehzahlabhängige Amplitude $a_{K,i}(n_{R,I,i})$ und die Phasenlage $b_{K,i}$.

Die Schwingungsanalyse kann auch auf die außerhalb der Resonanzbereiche $n_R$ liegenden Druckdrehzahlbereiche erweitert werden, so dass stetige Amplituden-Drehzahl-Funktionen der Kompensationsmomente $M_K$ für den gesamten Druckdrehzahlbereich $n_u...n_o$ gespeichert werden.

In der Regel werden im Druckdrehzahlbereich $n_u...n_o$ aufgrund der mit höheren Drehzahlen n zunehmenden Schwingungsdämpfung nur wenige Eigenfrequenzen $f_{eig,k}$ vorliegen, die zu relevanten druckqualitätsmindernden Resonanzschwingungen $S_R$ führen. Diese Resonanzschwingungen $S_R$ weisen in der Regel auch nur wenige diskrete harmonische Anteile auf, deren Frequenz f zur Resonanz innerhalb des Druckdrehzahlbereiches $n_u...n_o$ führen, so dass nur eine geringe Anzahl von Kompensationsmomenten bzw. deren Parameter abzuspeichern sind (Fig. 3b). Sind die Resonanzschwingungen $S_{R,I,i}$ in einem Resonanzdrehzahlbereich $n_{R,I,i}$ so gering, dass sie den zulässigen Toleranzbereich $S_{zul}$ für den Übergabepasser nicht überschreiten, können sie unberücksichtigt bleiben. Im Beispiel der Fig.3b trifft dies für den Resonanzdrehzahlbereich $n_{R,2,6}$ zu.

Da die Kompensation der Resonanzschwingungen $S_R$ vorzugsweise über den in den Antriebsräderzug ARZ eingespeisten Antriebsmoment $M_A$ des Hauptantriebsmotors M erfolgen soll und nicht an den einzelnen Entstehungsorten der Rotationsschwingungen S selbst, müssen in einem weiteren Verfahrensschritt die Übertragungsfunktionen, d.h. Dämpfungsgrade und Phasenverschiebungen der eingebrachten Kompensationsmomente $M_K$ zwischen Hauptantrieb M und den Schwingungsquellen berücksichtigt werden. Die Übertragungsfunktionen können aus einem Schwingungsmodell der Druckmaschine gewonnen werden, dazu muss jedoch die Lage der Schwingungsquellen genau identifiziert werden und der Aufwand zur Modellierung von Druckmaschinen ist sehr hoch. Im Interesse einer Vereinfachung des Verfahrens erscheint es daher zweckmäßig, die Kompensationsparameter in einem weiteren Probelauf empirisch zu optimieren. Dazu werden die Kompensationsmomente $M_{K,I,i}$ in den zugeordneten Resonanzdrehzahlbereichen $n_{R,I,i}$ einzeln durch entsprechende Modulation des Antriebsmotorstromes $I_M$ des Hauptantriebsmotors M erzeugt und dem kontinuierlichen Antriebsmoment $M_A$ überlagert, wobei zunächst die Phasenlage $b_{K,I,i}$ verändert wird, bis eine Schwingungsdämpfung an allen Bogenübergabestellen eintritt. Danach erfolgt eine Erhöhung der Amplitude $a_{K,I,i}$ des Kompensationsmoments $M_{K,I,i}$, bis sich die Amplituden der Passerabweichungen an allen Messpunkten an oder zwischen den Druckwerken innerhalb des vorgegebenen Toleranzgrenzwertes $S_{zul}$ befinden. Dabei ist nicht eine maximale Schwingungstilgung an einer Bogenübergabestelle maßgebend, sondern die Einhaltung des Toleranzgrenzwertes für die geforderte Druckqualität an jeder Bogenübergabestelle.

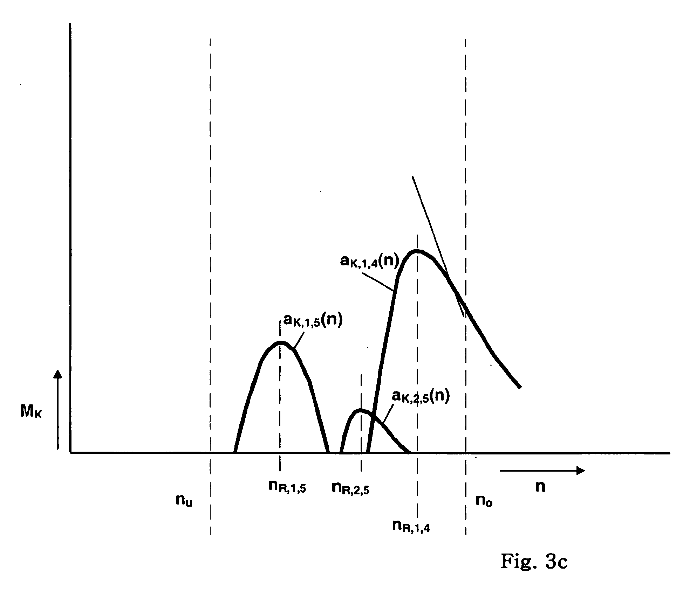

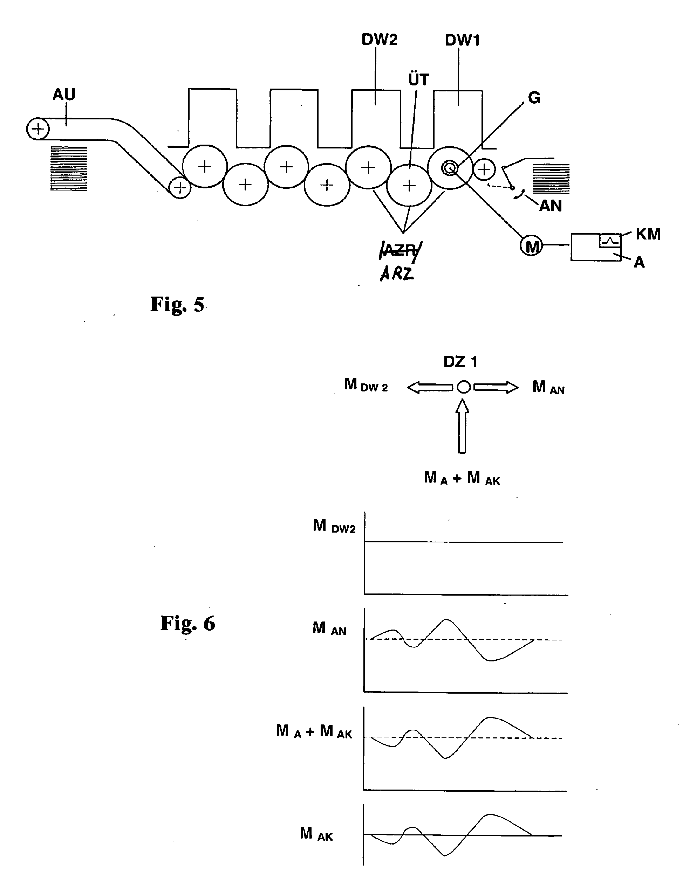

Die so optimierten Kompensationsparameter $a_{K,I,i}$, $b_{K,I,i}$ und zugeordneten Drehzahlbereiche $n_{R,I,i}$ werden in der Antriebsregelung A des Hauptantriebsmotors M gespeichert. Dafür kann ein separates Kompensationsmodul KM vorgesehen sein, das über eine vorhandene Schnittstelle zur Antriebsregelung A beim Durchfahren der Resonanzdrehzahlbereiche $n_{R,I,i}$ die dafür gespeicherten Kompensationsparameter an die Stromregelung übergibt, die nach einem programmierbaren Algorithmus den für den Druckbetrieb benötigten Antriebsmotorstrom $I_M$ moduliert, so dass die zur Kompensation erforderlichen Gegenmomente $M_K$ dem Antriebsmoment $M_A$ aufgeprägt werden, wobei beim Durchfahren der Resonanzdrehzahlbereiche $n_{R,I,i}$ jeweils nur die für diesen Drehzahlbereich bestimmten Kompensationsparameter (a,b,i)$_{K,l,i}$ aktiviert werden (Fig. 3c und Fig.4). Im Resonanzdrehzahlbereich n$_{K,l,i}$ wirkt dann das Gegenmoment

$$M_{K,l,i} = a_{K,l,i}(n_{K,l,i}) \cdot \sin(t \cdot (i \cdot n_{K,l,i}) + b_{K,l,i}). \tag{3}$$

Schwingt die Druckmaschine bei Resonanz in einer der Eigenfrequenzen f$_{eig,l}$ , so bilden sich zeitkonstante Schwingungsamplitudenverläufe S$_{eig,l}$ (Eigenformen) über der Länge der Druckmaschine heraus (Fig.1 und Fig.2), wobei die Schwingungsamplituden der relevanten ersten und zweiten Eigenformen S$_{eig,1}$ , S$_{eig,2}$ lokale Extrema an den äußeren Druckwerken (im Beispiel DW1 und DW4) aufweisen, so dass mit einer Anordnung des Hauptantriebsmotors M am ersten Druckwerk DW1 nach der Bogenanlage AN, d.h. an einem Ort des Auftretens hoher Schwingungsamplituden, günstige Vorraussetzungen für eine effektive Kompensation der Resonanzschwingungen S$_R$ über den Hauptantrieb M geschaffen sind.

Das erfindungsgemäße Verfahren ist anstelle der Antriebsstrommodulation am Hauptantriebsmotor M ebenso durchführbar mit einer Drehmomentüberlagerung durch einen weiteren Antrieb, der ein beliebiger, auf den Antriebsräderzug ARZ wirkender Motor sein kann, dessen Antriebs- oder Bremsmoment die Kompensationsmomente M$_K$ im Antriebsräderzug ARZ bildet. Beispielsweise kann ein Einzelantrieb an einem Plattenzylinder im Druckbetrieb mit dem Antriebsräderzug ARZ verbunden bleiben und die Kompensationsmomente M$_K$ unabhängig vom Hauptantriebsmotor M in den Antriebsräderzug ARZ einspeisen.

Obgleich die für einen typischen Betriebszustand der Rotationsdruckmaschine ermittelten und gespeicherten Kompensationsparameter auch bei druckauftragsbedingten Veränderungen des Schwingungsverhaltens der Druckmaschine eine ausreichende Dämpfungswirkung entfalten, kann das Verfahren durch die Ermittlung und Speicherung der für charakteristische, sich häufig wiederholende abweichende Betriebszustände optimalen Kompensationsparameter verbessert werden. Unterschiedliche Betriebszustände der Rotationsdruckmaschine werden beispielsweise durch unterschiedliche Betriebsmodi von An- oder Getrieben mit unterschiedlichen Dämpfungseigenschaften, das An- oder Abschalten von einzelnen peripheren Funktionsgruppen oder durch unterschiedliche Reibung der farbführenden Zylinder oder Walzen geschaffen. Wenn für jeden der charakteristischen Betriebszustände in den Testläufen dafür optimale Kompensationsparameter ermittelt und im Kompensationsmodul KM gespeichert werden und im späteren praktischen Druckbetrieb betriebszustandabhängig in der Antriebsregelung A aktiviert werden, kann zumindest für Druckaufträge mit Standardmaschineneinstellungen eine stets optimale Schwingungskompensation erzielt werden.

Das erfindungsgemäße Verfahren kann vorteilhaft erweitert werden durch eine automatisierte Anpassung der Kompensationsmomente M$_K$ an die betriebsartenabhängigen Änderungen des Schwingungsverhaltens der Druckmaschine während des Druckbetriebes, wenn mindestens zwei Drehwinkelgeber G permanent an der Druckmaschine vorhanden sind (z.B. Drehwinkelgeber G am Anfang und am Ende des Antriebsräderzuges ARZ wie es z.B. für Bogenrotationsdruckmaschinen mit Wendeeinrichtung bekannt ist).

Durch eine stetige Detektion von Amplituden a$_i$ und Phasenlagen b$_i$ der Rotationsschwingungen S mit Hilfe programmierter Filteralgorithmen können während des Druckbetriebes in automatisierten Zyklen die aktuellen Schwingungsparameter der Resonanzschwingungen (S$_R$) fortlaufend ermittelt, Korrekturen an den gespeicherten Kompensationsparametern vorgenommen und die Antriebsmomente (M$_A$) mit den korrigierten Kompensationsmomenten M$_K$ überlagert werden.

Die Parameter der Kompensationsmomente M$_K$ können damit zyklisch an den Betriebszustand der Rotationsdruckmaschine angepasst werden und eine zu jedem Zeitpunkt optimale Resonanzschwingungskompensation bewirken. Die Aktualisierungszyklen für die Kompensationsparameter werden zweckmäßig von der Maschinensteuerung bei Aktivierung der für den jeweiligen Betriebszustand relevanten Einstellungen ausgelöst.

Das erfindungsgemäße Verfahren ist auch auf dynamisch getrennte Teilmaschinen mit separaten Antriebsmotoren M$_j$ anwendbar, wie z.B. auf Druckwerksgruppen j vor und nach einer Wendeeinrichtung, wenn diese eine Trennstelle im Antriebsräderzug ARZ bildet und der Antriebsräderzug dadurch in zwei dynamisch unabhängige Antriebsräderzüge ARZ$_j$ mit jeweils einem Antriebsmotor M$_j$ aufgeteilt wird. In diesen Fällen werden die Resonanzschwingungen S$_{R,j}$ in jeder Teilmaschine j bzw. Druck- oder Lackwerksgruppe j separat erfasst und mit den zugeordneten Antriebsregelungen A$_j$ und den zugeordneten Hauptantriebsmotoren M$_j$ separat kompensiert.

In Fig. 5 ist beispielhaft eine Bogenrotationsdruckmaschine in Reihenbauweise mit einer Bogenanlage AN, Druckwerken DW1, DW2 und einer Bogenauslage AU schematisch dargestellt. Von den Druckwerken DW sind lediglich die schwingungsrelevanten bogenführenden Druckzylinder DZ und die Übergabetrommeln ÜT dargestellt. Zumindest diese Rotationskörper werden über einen durchgehenden Antriebsräderzug ARZ in ihrer Drehbewegung synchronisiert. Der Antriebsmoment M$_A$ für die Druckmaschine wird durch einen Hauptantriebsmotor M am Druckzylinder DZ1 des ersten Druckwerkes DW1 in den Antriebsräderzug ARZ eingespeist und fließt von dort über den Antriebsräderzug ARZ in das zweite und alle folgenden Druck- und/oder Lackwerke. Gleichzeitig fließt ein Teil des Antriebsmomentes M$_A$ in entgegengesetzter Richtung zur Bogenanlage AN.

Der Hauptantriebsmotor M wird von einer Antriebsregelung A drehzahl- und drehmomentgeregelt. Die Antriebsregelung A für den Hauptantriebsmotor M ist ein bekannter programmierbarer Antriebsregler, der in die Maschinensteuerung eingebunden ist. Der Antriebsregler weist ein programmierbares Modul KM für die Speicherung der Kompensationsmomente $M_{AK}$ auf.

In einer Bogenanlage laufen eine Vielzahl von taktgebundenen Arbeitsbewegungen ab, die dem Bogentransport und der genauen Bogenausrichtung dienen. Die Bewegungen laufen mit periodischer Beschleunigung und Bremsung der Arbeitsorgane ab und sind aufgrund dessen mit Lastwechseln im Antriebssystem der Bogenanlage AN verbunden. Da die Bogenanlage AN antriebsseitig mit dem Antriebsräderzug ARZ am benachbarten ersten Druckwerk DW1 gekoppelt ist, werden diese periodischen (synchronen) Drehmomentschwankungen bzw. Drehmomentschwingungen $M_{AN}$ zunächst auf den Antriebsräderzug ARZ im ersten Druckwerk übertragen und dann über die Zahnflankenkontakte der im Eingriff stehenden Zahnräder auf die nachfolgenden Druck- und/oder Lackwerke weitergeleitet. Infolge der Elastizität der Antriebszahnräder und der Massenträgheit der angetriebenen Rotationskörper DZ,ÜT würden dadurch Rotationsschwingungen über der gesamten Länge des Antriebsräderzuges ARZ angeregt. Diese für die Druckqualität kritischen Drehmomentschwingungen $M_{AN}$ der Bogenanlage AN werden nun erfindungsgemäß an der Stelle, an der sie auf den Antriebsräderzug ARZ übertragen werden - das ist das erste Druckwerk DW1 - mit dem ebenfalls an dieser Stelle eintreibenden Hauptantriebsmotor M kompensiert, indem dessen Antriebsmoment $M_A$ den störenden Drehmomentschwingungen $M_{AN}$ entgegengerichtete Kompensationsmomente $M_{AK}$ aufgeprägt werden. Die Drehmomentschwingungen $M_{AN}$ von der Bogenanlage AN werden an der Eintriebsstelle des Hauptantriebsmotors M getilgt. Der zum zweiten Druckwerk fließende resultierende Antriebsdrehmoment $M_{AN}+M_A+M_{AK}$ ist somit schwingungsfrei (Fig.6).

Das erfindungsgemäße Verfahren nutzt den Vorteil, dass die innerhalb von Bogenanlagen erzeugten Drehmomentschwingungen durch bekannte Berechnungsmethoden recht genau bestimmt werden können. Es handelt sich um geschlossene Systeme mit bekannten Massen und Bewegungsabläufen, die exakt modellierbar sind und weitgehend unbeeinflusst von den Eigenschaften der zu verarbeitenden Bogen ablaufen.

Die Drehmomentschwankungen $M_{AN}$ werden als Drehmomentschwingungen behandelt und einer Fourier-Analyse unterworfen, die Fourierkoeffizienten einer kontinuierlichen $M_{AN}(\varphi)$-Funktion liefert.

Danach lassen sich Schwingungen als Summe von i diskreten harmonischen Schwingungen mit unterschiedlichen Anteilen $a_i$, Frequenzen i.n und Phasenlagen $b_i$ beschreiben:

$$M_{AN} = a_0 + a_1 \cdot \sin(t \cdot (1 \cdot n) + b_1) + a_2 \cdot \sin(t \cdot (2 \cdot n) + b_2) + ... + a_i \cdot \sin(t \cdot (i \cdot n) + b_i) \qquad (4)$$

mit

$$\varphi = t \cdot i \cdot n$$

Die Kompensationsmomente $M_{AK}$ des Hauptantriebsmotors M werden in diesem Fall als Fourierfunktion mit entgegengesetzten Phasenlagen im Modul KM der Antriebsregelung A gespeichert.

Die periodischen Drehmomentschwankungen $M_{AN}$ können im Ergebnis der Fourierkoeffizientenbestimmung oder einer Drehmomentmessung auch als diskrete $(\varphi, M_{AK})$ - Wertepaare mit entgegengesetzter Phasenlage im Speichermodul für die Kompensationsmomente KM abgelegt werden.

Da die Kompensationsmomente $M_{AK}$ ebenso wie die Antriebsmomente $M_A$ von der vorgegebenen Drehzahl n abhängen und daher für jede mögliche Drehzahl separat gespeichert werden müssten, ist es zweckmäßig, sie als auf den Antriebsmoment $M_A$ des Hauptantriebsmotors M bezogene (normierte) Größe $M_{AK}/M_A$ zu speichern.

Sollte eine Berechnung der Kompensationsmomente nicht vorgesehen sein, besteht die alternative Möglichkeit zur Messung der Drehmomentschwankungen $M_{AN}$ mittels geeigneter Drehmomentsensoren an der Antriebswelle der Bogenanlage AN oder die Möglichkeit zur Erfassung der Drehwinkelabhängigkeit des Antriebsmotorstromes $I_M$ des Hauptantriebsmotors M bei abgekoppelten Druck- und Lackwerken DW.

Zur Kompensation der Drehmomentschwingungen $M_{AN}$ der Bogenanlage AN wird drehzahlabhängig das der jeweils eingestellten Drehzahl (Druckgeschwindigkeit) zugeordnete normierte Kompensationsmoment $M_{AK}/M_A(\varphi)$, bzw. alle zugeordneten $(\varphi, M_{AK}/M_A)$-Wertepaare im Modul KM aufgerufen und der Antriebsmotorstrom $I_M$ des Hauptantriebsmotors M mit Hilfe der in der Antriebsregelung A implementierten M-I-Übertragungsfunktionen dementsprechend moduliert .

Das erfindungsgemäße Verfahren ist anstelle der Antriebsstrommodulation am Hauptantriebsmotor M ebenso durchführbar mit einer Drehmomentüberlagerung durch einen zweiten Antrieb, der ein wesentlich kleinerer, nahezu verzögerungsfrei auf den Antriebsräderzug ARZ am ersten Druckwerk DW1 wirkender Motor sein kann, dessen Antriebs- oder Bremsmoment die Kompensationsmomente $M_{AK}$ in den Antriebsräderzug ARZ einprägt. Durch das erfindungsgemäße Verfahren kann mit einfachen Mitteln ein Druckmaschinenantrieb geschaffen werden, der schwingungsfrei den Antriebsräderzug antreibt und nicht von der Gesamtkonfiguration beeinflusst wird. Ohne zusätzliche mechanischen Getriebe wird ein Leistungsausgleich an der Eintriebsstelle des Hauptantriebsmotors am ersten Druckwerk nach der Bogenanlage erreicht. Dadurch werden höhere Druckgeschwindigkeiten ermöglicht, ohne dass Störungen aus der Bogenanlage bemerkbar werden. Der schwingungsbedingte Verschleiß wird reduziert und das Druckergebnis verbessert.

Aufstellung der verwendeten Bezugszeichen

| | |
|---|---|
| A, $A_j$ | Antriebsregelung |
| AN | Bogenanlage |
| ARZ, $ARZ_j$ | Antriebsräderzug |
| AU | Bogenauslage |
| DW,DW1... | Druck- oder Lackwerke |
| DZ,DZ1... | Druckzylinder |
| G | Drehwinkelgeber |
| M, $M_j$ | Hauptantriebsmotor |
| $I_M$ | Antriebsmotorstrom |
| KM | Modul für Kompensationsparameter |
| $M_A$ | Antriebsmoment |
| $M_K$ | Kompensationsmoment |
| $M_{AN}$ | Drehmomentschwingung der Bogenanlage |
| S | Rotationsschwingung, Erregerschwingung |
| $S_{eig}$ | Eigenform |
| $S_R$ | Resonanzschwingung |
| $S_{zul}$ | zulässiger Toleranzbereich für Rotationsschwingungen |
| ÜT,ÜT1... | Übergabetrommel |

| | |
|---|---|
| a | Amplitude der Rotationsschwingung |
| $a_i$ | Amplitude der i-ten harmonischen Schwingung |
| $a_K$ | Amplitude der Kompensationsschwingung |
| b | Phasenlage der Rotationsschwingung |
| $b_i$ | Phasenlage der i-ten harmonischen Schwingung |
| $b_K$ | Phasenlage der Kompensationsschwingung |
| f | Frequenz der Rotationsschwingung, Erregerfrequenz |
| $f_{eig}$ | Eigenfrequenz |
| i | Ordnung des diskreten harmonischen Schwingungsanteiles, (Erregerordnung) |
| j | dynamisch eigenständige Druck- oder Lackwerksgruppe |
| l | Ordnung der Eigenfrequenz |
| n | Drehzahl |
| $n_o$ | obere Druckdrehzahl |
| $n_R$ | Resonanzdrehzahl |
| $n_u$ | untere Druckdrehzahl |
| t | Zeit |
| $\Delta\varphi$ | Drehwinkeldifferenz zwischen den Druckzylindern |
| $\varphi$ | Drehwinkel |

**Patentansprüche**

1. Verfahren zur Kompensation von rotationsschwingungsbedingten Passerabweichungen in einer Bogenrotationsdruckmaschine mit einem eine Bogenanlage (AN) und Druck- und/oder Lackwerke (DW) verbindenden Antriebsräderzug (ARZ) und einem auf den Antriebsräderzug wirkenden Hauptantriebsmotor (M), dem eine Antriebsregelung (A) zugeordnet ist, mit folgenden Schritten:

   - einmalige Erfassung von Rotationsschwingungen (S) im Antriebsräderzug (ARZ) und von zugeordneten Passerabweichungen an den Druck- oder Lackwerken in Resonanzdrehzahlbereichen ($n_R$) während des Durchfahrens eines Druckdrehzahlbereiches $n_u$ bis $n_o$ unter Druckbedingungen,

- Ermittlung diskreter harmonischer Anteile der erfassten Rotationsschwingungen (S) für die Resonanzdrehzahlbereiche ($n_R$), in denen Passerabweichungen außerhalb eines zulässigen Toleranzbereiches auftreten,
- Ermittlung von Parametern für entgegengerichtete harmonische Kompensationsmomente ($M_K$) aus den harmonischen Anteilen der erfassten Rotationsschwingungen (S),
- Speicherung der Parameter der Kompensationsmomente ($M_K$) und ihrer Zuordnungen zu den Resonanzdrehzahlbereichen ($n_R$) und
- drehzahlabhängige Überlagerung des Antriebsmomentes ($M_A$) des Hauptantriebsmotors (M) in den Resonanzdrehzahlbereichen ($n_R$) mit den gespeicherten Kompensationsmomenten ($M_K$) im Druckbetrieb.

2. Verfahren nach Anspruch 1, wobei die Parameter für die Kompensationsmomente ($M_K$) im Antriebsräderzug (ARZ) für verschiedene Betriebszustände der Rotationsdruckmaschine ermittelt und gespeichert werden sowie betriebszustandabhängig dem Antriebsmoment ($M_A$) überlagert werden.

3. Verfahren nach Anspruch 1 oder 2, wobei die ermittelten Kompensationsmomente ($M_K$) dem Antriebsmoment ($M_A$) des Hauptantriebsmotors (M) drehzahlabhängig überlagert und dabei die Parameter der Kompensationsmomente ($M_K$) optimiert werden.

4. Verfahren nach Anspruch 1,2 oder 3, wobei die Kompensationsmomente ($M_K$) durch Modulation des Motorstromes ($I_M$) des Hauptantriebsmotors (M) erzeugt werden.

5. Verfahren nach Anspruch 1,2 oder 3, wobei die Kompensationsmomente ($M_K$) von einem weiteren Antriebsmotor in den Antriebsräderzug (ARZ) eingeleitet werden.

6. Verfahren nach Anspruch 1 oder 3, wobei die Rotationsdruckmaschine aus mehreren Druck- oder Lackwerksgruppen (j) mit jeweils eigenem Antriebsräderzug ($ARZ_j$) und eigenem Antriebsmotor ($M_j$) gebildet ist und die Kompensationsmomente ($M_{K,j}$) für jede Druck- oder Lackwerksgruppe (j) separat ermittelt und optimiert werden.

7. Verfahren nach Anspruch 1 oder 6, wobei der Hauptantriebsmotor (M) dem ersten oder letzten Druck- oder Lackwerk (DW) einer Rotationsdruckmaschine oder einer Druck- oder Lackwerksgruppe (j) zugeordnet ist.

8. Verfahren nach Anspruch 1, 2 oder 6, wobei die Erfassung der Rotationsschwingungen (S) mit Drehwinkelgebern (G) an Druckzylindern (DZ) erfolgt.

9. Verfahren nach Anspruch 8, wobei Drehwinkelgeber (G) am ersten und letzten Druck- oder Lackwerk (DW) einer Druckmaschine oder einer Druck- oder Lackwerksgruppe (j) angeordnet sind.

10. Verfahren nach Anspruch 1 oder 6, wobei während des Druckbetriebes in automatisierten Zyklen die aktuellen Schwingungsparameter der Resonanzschwingungen ($S_R$) mit Hilfe von programmierbaren Filteralgorithmen ermittelt, daraufhin Parameterkorrekturen für die gespeicherten Kompensationsmomente ($M_K$) vorgenommen und die Antriebsmomente ($M_A$) mit den aktuellen korrigierten Kompensationsmomenten ($M_K$) überlagert werden.

11. Verfahren nach Anspruch 1, wobei zur Reduzierung von Rotationsschwingungen, die durch die Bogenanlage (AN) verursacht werden, folgende Schritte durchgeführt werden

- einmalige Ermittlung von Drehmomentschwingungen ($M_{AN}$), die von der Bogenanlage (AN) auf den Antriebsräderzug (ARZ) übertragen werden, in Abhängigkeit von der Drehzahl (n),
- Speicherung entgegen gerichteter Kompensationsdrehmomente ($M_{AK}$) in der Antriebsregelung (A) und
- drehzahlabhängige Überlagerung des Antriebsmomentes ($M_A$) des Hauptantriebsmotors (M) mit den Kompensationsdrehmomenten ($M_{AK}$), so dass der resultierende Antriebsdrehmoment $M_{DW2}$ zum zweiten Druck- oder Lackwerk frei von Drehmomentschwingungen ($M_{AN}$) der Bogenanlage ist.

12. Verfahren nach Anspruch 11, wobei die Drehmomentschwingungen ($M_{AN}$) aus einem Drehmomentmodell der Bogenanlage (AN) berechnet werden.

13. Verfahren nach Anspruch 11, wobei die Drehmomentschwingungen ($M_{AN}$) der Bogenanlage (AN) aus Drehmoment- oder Motorstrom- Drehwinkel-Messungen ermittelt werden.

**14.** Verfahren nach Anspruch 11, wobei die Kompensationsmomente ($M_{AK}$) durch Modulation des Antriebsmotorstromes ($I_M$) des Hauptantriebsmotors (M) erzeugt werden.

**15.** Verfahren nach Anspruch 11, wobei die Kompensationsmomente ($M_{AK}$) durch einen zweiten hochdynamischen Antrieb, der mit dem Hauptantriebsmotor (M) zusammenwirkt, gebildet werden.

**Claims**

**1.** Method of compensating for registration deviations, which are induced by rotational oscillations, in a rotary sheet printing machine, with, a drive wheel train (ARZ) connecting a sheet feeder (AN) and printing and/or lacquering mechanisms (DW) and a main drive motor (M), which acts on the drive wheel train and with which a drive regulating means (A) is associated, comprising the following steps:

- single detection of rotational oscillations (S) in the drive wheel train (ARZ) and of associated registration deviations at the printing or lacquering mechanisms in resonance rotational speed ranges ($n_R$) during transit of a printing rotational speed range in $n_u$ to $n_o$ under printing conditions,
- determining discrete harmonic components of the detected rotational oscillations (S) for the resonance rotational speed ranges ($n_R$) in which registration deviations outside a permissible tolerance range occur,
- determining parameters for oppositely directed harmonic compensatory moments ($M_K$) from the harmonic components of the detected rotational oscillations (S),
- storage of the parameters of the compensatory moments ($M_K$) and the associations thereof with the resonance rotational speed ranges ($n_R$) and
- rotational-speed-dependent superimposition of the drive moment ($M_A$) of the main drive motor (M) in the resonance rotational speed ranges ($n_R$) by the stored compensatory moments ($M_K$) in printing operation.

**2.** Method according to claim 1, wherein the parameters for the compensatory moments ($M_K$) in the drive wheel train (ARZ) are determined and stored for different operational states of the rotary printing machine and are superimposed on the drive moment ($M_A$) in dependence on operational state.

**3.** Method according to claim 1 or 2, wherein the determined compensatory moments ($M_K$) are superimposed on the drive moment ($M_K$) of the main drive motor (M) in dependence on rotational speed and the parameters of the compensatory moments ($M_K$) are thereby optimised.

**4.** Method according to claim 1, 2 or 3, wherein the compensatory moments ($M_K$) are produced by modulation of the motor current ($I_M$) of the main drive motor (M).

**5.** Method according to claim 1, 2 or 3, wherein the compensatory moments ($M_K$) are introduced into the drive wheel train (ARZ) by a further drive motor.

**6.** Method according to claim 1 or 3, wherein the rotary printing machine is formed from several printing or lacquering mechanism groups (j) each with an own drive wheel train ($ARZ_j$) and an own drive motor ($M_j$) and the compensatory moments ($M_{K,j}$) are separately determined and optimised for each printing or lacquering mechanism group (j).

**7.** Method according to claim 1 or 6, wherein the main drive motor (M) is associated with the first or last printing or lacquering mechanism (DW) of a rotary printing machine or a printing or lacquering mechanism group (j).

**8.** Method according to claim 1, 2 or 6, wherein the detection of the rotational oscillations (S) is carried out by rotational angle transmitters (G) at printing cylinders (DZ).

**9.** Method according to claim 8, wherein rotational angle transmitters (G) are arranged at the first and last printing or lacquering mechanism (DW) of a printing machine or of a printing or lacquering mechanism group (j).

**10.** Method according to claim 1 or 6, wherein during the printing operation the instantaneous oscillation parameters of the resonance oscillations ($S_R$) are determined in automated cycles with the help of programmable filter algorithms, parameter corrections for the stored compensatory moments ($M_K$) are thereupon undertaken and the drive moments ($M_A$) are superimposed by the instantaneous corrected compensatory moments ($M_K$).

**11.** Method according to claim 1, wherein the following steps are undertaken for reduction in rotational oscillations caused by the sheet feeder (AN):

- single determination of torque oscillations ($M_{AN}$), which are transmitted by the sheet feeder (AN) to the drive wheel train (ARZ), in dependence on the rotational speed (n),
- storage of oppositely directed compensatory torques ($M_{AK}$) in the drive regulation means (A) and
- rotational-speed-dependent superimposition of the drive moment ($M_A$) of the main drive motor (M) by the compensatory torques ($M_{AK}$) so that the resultant drive torque ($M_{DW2}$) for the second printing or lacquering mechanism is free of torque oscillations ($M_{AN}$) of the sheet feeder.

**12.** Method according to claim 11, wherein the torque oscillations ($M_{AN}$) are calculated from a torque model of the sheet feeder (AN).

**13.** Method according to claim 11, wherein the torque oscillations ($M_{AN}$) of the sheet feeder (AN) are ascertained from torque or motor current rotational angle measurements.

**14.** Method according to claim 11, wherein the compensatory moments ($M_{AK}$) are produced by modulation of the drive motor current ($i_M$) of the main drive motor (M).

**15.** Method according to claim 11, wherein the compensatory moments ($M_{AK}$) are formed by a second high-dynamic drive co-operating with the main drive motor (M).

**Revendications**

**1.** Procédé de compensation des divergences de repères occasionnées par les vibrations de rotation dans une machine d'impression rotative feuille à feuille, comportant un train de roues d'entraînement (ARZ) reliant un margeur (AN) et des groupes d'impression et/ou de vernissage (DW) et un moteur d'entraînement (M), principal, coopérant avec le train de roues d'entraînement et auquel est associée une régulation d'entraînement (A), procédé comprenant les étapes suivantes :

- saisie unique des vibrations de rotation (S) dans le train de roues d'entraînement (ARZ) et des divergences de repères associées dans les groupes d'impression ou de vernissage, dans les plages de vitesses de rotation de résonance ($n_R$) pendant le passage d'une plage de vitesses de rotation nu-no dans les conditions d'impression,
- détermination des composantes harmoniques discrètes des vibrations de rotation saisies (S) pour les plages de vitesses de rotation de résonance ($n_R$) dans lesquelles se produisent des divergences de repères dépassant une plage de tolérance autorisée,
- détermination des paramètres de couples de compensation ($M_K$) harmoniques, opposés à partir des composantes harmoniques des vibrations de rotation saisies (S),
- enregistrement en mémoire des paramètres des couples de compensation ($M_K$) et de leur association aux plages de vitesses de rotation de résonance ($n_R$) et
- combinaison du couple d'entraînement ($M_A$) du moteur principal (M) dans les plages de vitesses de rotation de résonance ($n_R$) avec les couples de compensation ($M_K$) enregistrés, en fonction de la vitesse de rotation, en mode d'impression.

**2.** Procédé selon la revendication 1, selon lequel on détermine les paramètres des couples de compensation ($M_K$) dans le train de roues d'entraînement (ARZ) pour différents états de fonctionnement de la machine d'impression rotative et on les enregistre en mémoire et combinaison avec le couple d'entraînement ($M_A$) selon l'état de fonctionnement.

**3.** Procédé selon les revendications 1 ou 2, selon lequel on combine les couples de compensation déterminés ($M_K$) au couple moteur ($M_A$) du moteur d'entraînement principal (M) en fonction de la vitesse de rotation et on optimise ainsi les paramètres des couples de compensation ($M_K$).

**4.** Procédé selon les revendications 1, 2 ou 3, selon lequel on génère les couples de compensation (MK) en modulant le courant d'alimentation (IM) du moteur principal (M).

**5.** Procédé selon les revendications 1, 2 ou 3, selon lequel
on applique les couples de compensation ($M_K$) par un autre moteur d'entraînement dans le train de roues d'entraînement (ARZ).

**6.** Procédé selon les revendications 1, ou 3, selon lequel
la machine d'impression rotative est formée de plusieurs groupes d'impression ou de vernissage (j) ayant chacun son propre train de roues d'entraînement ($ARZ_j$) et son propre moteur ($M_j$) et on détermine séparément les couples de compensation ($M_{K,j}$) pour chaque groupe d'impression ou de vernissage (j) et on les optimise.

**7.** Procédé selon les revendications 1 ou 6, selon lequel
on associe le moteur principal (M) au premier ou au dernier groupe d'impression ou de vernissage (DW) d'une machine d'impression rotative ou d'un groupe d'impression ou de vernissage (j).

**8.** Procédé selon les revendications 1, 2 ou 6, selon lequel
la saisie des vibrations de rotation (S) se fait avec des capteurs d'angle de rotation (G) sur les cylindres d'impression (DZ).

**9.** Procédé selon la revendication 8, selon lequel
des capteurs d'angle de rotation (G) sont associés au premier et au dernier cylindre d'impression ou de vernissage (DW) d'une machine d'impression ou d'un groupe d'impression ou de vernissage (j).

**10.** Procédé selon les revendications 1 ou 6, selon lequel
pendant l'impression, on détermine dans des cycles automatisés, les paramètres actuels des vibrations de résonance ($S_R$) à l'aide d'algorithmes de filtres, programmés, puis on effectue les corrections des paramètres pour les couples de compensation en mémoire ($M_K$) et on combine les couples d'entraînement ($M_A$) aux couples de compensation corrigés, actuels ($M_K$).

**11.** Procédé selon la revendication 1, selon lequel
pour réduire les vibrations de rotation occasionnées par le margeur (AN) on effectue les étapes suivantes :

- saisie unique des vibrations de couple ($M_{AN}$) transmises par le margeur (AN) au train de roues d'entraînement (ARZ) en fonction de la vitesse de rotation (n),
- mémorisation des couples de compensation ($M_{AK}$) de sens opposé dans la régulation d'entraînement (A) et
- combinaison en fonction de la vitesse de rotation du couple d'entraînement ($M_A$) du moteur principal (M) aux couples de compensation ($M_{AK}$) pour que le couple d'entraînement résultant $M_{DW2}$ pour le second groupe d'impression ou de vernissage ne reçoive plus les oscillations de couple ($M_{AN}$) du margeur.

**12.** Procédé selon la revendication 11, selon lequel
on calcule les oscillations de couple ($M_{AN}$) à partir d'un modèle de couple du margeur (AN).

**13.** Procédé selon la revendication 11, selon lequel
on détermine les oscillations de couple ($M_{AN}$) du margeur (AN) par des mesures de couple ou de courant dans le moteur ou d'angle de rotation.

**14.** Procédé selon la revendication 11, selon lequel
on génère des couples de compensation ($M_{AK}$) par modulation du courant d'entraînement ($I_M$) dans le moteur principal (M).

**15.** Procédé selon la revendication 11, selon lequel
on forme les couples de compensation ($M_{AK}$) par un second entraînement fortement dynamique coopérant avec le moteur principal (M).

Fig. 1

Fig. 2

Fig. 4a

Fig. 4b

Fig. 3a

Fig. 3b

Fig. 3c

**Fig. 5**

**Fig. 6**

**EP 1 674 258 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4412945 A1
- DE 19914627 A1
- DE 10149525 A1
- EP 0592850 B1